# EUROPEAN PATENT APPLICATION

(11) **EP 4 513 430 A2**
(43) Date of publication of application: **26.02.2025**
(21) Application number: 24195480.9
(22) Date of filing: 20.08.2024
(51) Int. Cl.: G06T 7/00, G06T 7/73

(54) **SYSTEM AND METHOD FOR LOCATING AND VISUALIZING CAMERA IMAGES IN RELATION TO A LARGE-SCALE MANUFACTURING PRODUCT**

(30) Priority: 22.08.2023 US 202318453407
(71) Applicant: Spirit AeroSystems, Inc., Wichita, KS 67210-0008 (US)
(72) Inventor: MATTHIES, Kevin, Wichita, 67210 (US); RAO, Bharath, Wichita, 67210 (US); BAUMFALK-LEE, John, Wichita, 67210 (US); HAYNES, Mark, Wichita, 67210 (US); McKENNA, Matthew William, WICHITA, 67210 (US)
(74) Representative: HGF

(57) **Abstract**

A system and a method for locating and visualizing camera images in relation to a large-scale manufacturing product with repetitive structures are disclosed. The system includes a trackable camera device, a tracking subsystem, and an image overlay module. The trackable camera device can capture images of surface features of the large-scale product. The tracking subsystem is configured to generate a tracking record that contains the position and location of the trackable camera device over time. The image overlay module is configured to precisely overlay the captured images on a three-dimensional model of the large-scale product based on where the trackable camera device was tracked when each image was captured. A method is disclosed for using the components of the system to overlay the captured images, and a method of auditing the large-scale product by comparing a region of interest to previously captured images overlaid on a respective three-dimensional model.

## Description

### FIELD

The present disclosure pertains to a system that is configured to capture images of a large-scale manufacturing product and generate a three-dimensional model of the manufacturing product with the captured images overlaid on at the locations where the images were captured.

### BACKGROUND

Aircraft airframes are large-scale structures that include a number of highly repetitive (self-similar) structural elements. Upon completion of manufacturing, airframe components must be inspected to ensure they conform to strict engineering specifications. For example, after an airframe component is manufactured, it is important to inspect the surfaces of the component to verify that the surfaces are free of foreign object debris (FOD). FOD inspection can be conducted visually, and the results of the inspection can be memorialized using photographs. But even though the presence or absence of FOD on a surface can be readily identified by visual inspection and captured in a photograph, it is difficult to log the occurrence or absence of FOD in an auditable fashion because of the large-scale, repetitious nature of airframe structures. For example, in the case of an airframe fuselage, a photograph of the fuselage after manufacturing is complete may depict a partial surface region including one or more windows, one or more stringers, and/or one or more skin panels. But because there are dozens of substantially identical windows, stringers, and skin panels in the fuselage, it is nearly impossible to determine where the photograph was taken within the fuselage retroactively. Even advanced algorithms for processing raw images cannot pinpoint a precise position on a fuselage where a photograph was taken.

### SUMMARY

In one aspect, a system for locating and visualizing camera images in relation to a large-scale manufacturing product includes a memory, a trackable camera device, a tracking subsystem, and an image overlay module. The memory stores a three-dimensional computer model of the large-scale manufacturing product in a local three-dimensional reference frame. The trackable camera device has a camera and a tracking marker. The camera can capture camera images and generate image files that include the camera images and timestamp data. The tracking marker can be connected to the camera directly or indirectly. The tracking subsystem includes a tracking controller and a memory. The tracking controller is configured to track the position and orientation of the trackable camera device in the local three-dimensional reference frame. The memory of the tracking subsystem stores computer-executable functions that are configured to be executed by the tracking controller, and when the computer-executable functions are executed by the tracking controller, they configure the tracking system to generate a tracking record that indicates the location and orientation of the trackable camera device in the three-dimensional reference frame over time. The image overlay module has an image processing controller and a memory. The memory of the image overlay module stores computer-executable functions that are configured to be executed by the image processing controller, and when the computer-executable functions are executed by the image processing controller, they configure the image overlay module to: (1) determine, based on the timestamp data and the tracking record, a timestamped camera location where each of the camera images was captured by the camera in relation to the three-dimensional reference frame; (2) interpolate, based on the timestamped camera locations and three-dimensional model, a captured surface region of the large-scale manufacturing product depicted in each respective camera image, the captured surface region being matted in the local three-dimensional reference frame; and (3) generate an image-overlaid model that includes the three-dimensional computer model and one or more of the camera images overlaid onto the three-dimensional computer model at the respective captured surface region.

In another aspect, a method of using a system for locating and visualizing camera images in relation to a large-scale manufacturing product includes at least one image processing controller and at least one memory. The memory is configured to store data comprising captured image files, a three-dimensional model of the large-scale manufacturing product in a local three-dimensional reference frame, and computer-executable instructions. The computer-executable instructions are configured to be executed by the at least one image processing controller, and when the computer-executable functions are executed by the at least one image processing controller, they configure the at least one image processing controller to process and render the three-dimensional computer model and image files. The method comprises two steps. First, a trackable camera device with a camera and a tracking marker is used to capture an image of a portion of the surface of the large-scale manufacturing product and generate a corresponding image file. Second, the at least one image processing controller is used to: (1) determine a location and orientation of the camera relative to the large-scale manufacturing product when the image is captured via the tracking marker; and (2) based on the determined location and orientation of the camera, overlay the captured image on the three-dimensional computer model of the large-scale manufacturing product in the local three-dimensional reference frame. The captured image is overlaid in a position, orientation, and size corresponding to the portion of the surface of the large-scale manufacturing product that was captured in the image.

In yet another aspect, a method for retroactively auditing a condition of a large-scale manufacturing product includes a number of steps. First, one or more camera images of the large-scale manufacturing product are captured. Each camera image depicts a respective captured surface region of the large-scale manufacturing product, and each is captured at a respective first point in time. Then, an image-overlaid model is generated. The image-overlaid model includes a three-dimensional model of the large-scale manufacturing product in a local three-dimensional reference frame and the one or more camera images. Each of the one or more camera images is overlaid onto the three-dimensional computer model in a respective position, size, and orientation that corresponds to the respective captured surface region. At a second point in time after each respective first point in time, a region of interest of the large-scale manufacturing product is determined, such as when a defect is identified on the surface. Subsequently, a view of the image-overlaid model is displayed. The image-overlaid model includes each camera image that depicts a captured surface region that is in the region of interest of the large-scale manufacturing product that was determined at the second point in time.

**In** another aspect, a method of identifying foreign object debris (FOD) on a type of large-scale manufacturing product comprises training a machine learning model for FOD-identification based on a plurality of image-overlaid models of previous units of said type of large-scale manufacturing products. Each image-overlaid model comprises camera images of the respective unit overlaid on a three-dimensional model of the type of large-scale manufacturing product. New images of a new unit of the large-scale manufacturing product are captured. Each new camera image depicts a respective captured surface region of the new unit. A new image-overlaid model comprising the three-dimensional computer model and each of the new camera images is overlaid onto the three-dimensional computer model in a respective position, size, and orientation corresponding to the respective captured surface region. The machine learning model is used for FOD-identification to identify FOD based on the new camera images.

Aspects and embodiments of the invention are also set out in the following numbered clauses:
Clause 1. A system for locating and visualizing camera images in relation to a large-scale manufacturing product, the system comprising:
   a memory storing a three-dimensional computer model of the large-scale manufacturing product in a local three-dimensional reference frame;
   a trackable camera device comprising a camera and a tracking marker, the camera configured to capture camera images and generate image files including the camera images and timestamp data;
   a tracking subsystem comprising a tracking controller configured for tracking a location and orientation of the trackable camera device in the local three-dimensional reference frame based on the tracking marker and a memory storing computer-executable functions configured to be executed by the tracking controller, and when executed by the tracking controller, configuring the tracking subsystem to generate a tracking record indicating the location and orientation of the trackable camera device in the local three-dimensional reference frame over time; and
   an image overlay module comprising an image processing controller and a memory storing computer-executable functions configured to be executed by the image processing controller, and when executed by the image processing controller, configuring the image overlay module to:
      determine, based on the timestamp data and the tracking record, a timestamped camera location where each of the camera images was captured by the camera in relation to the local three-dimensional reference frame;
      interpolate, based on the timestamped camera locations and three-dimensional model, a captured surface region of the large-scale manufacturing product depicted in each respective camera image, the captured surface region being mapped in the local three-dimensional reference frame; and
      generate an image-overlaid model comprising the three-dimensional computer model and one or more of the camera images overlaid onto the three-dimensional computer model at the respective captured surface region.
Clause 2. The system of Clause 1, wherein each image file further comprises metadata including at least one of image size data, image definition data, and camera focus data, wherein the image overlay module is configured to use the metadata to interpolate the captured surface region.
Clause 3. The system of Clause 2, wherein the image overlay module is configured to interpolate the captured surface region by:
   determining a respective orientation of the camera at each timestamped camera location; and
   mapping an area of a nearest surface of the three-dimensional model relative to each timestamped camera location based on the respective metadata and camera orientation.
Clause 4. The system of Clause 3, wherein the image overlay module is further configured to interpolate the captured surface region by calculating a distance between each timestamped camera location and the nearest surface of the three-dimensional model according to the respective orientation of the camera.
Clause 5. The system of any one of Clauses 1 to 4, further comprising a database with a memory configured to store data comprising the image files.
Clause 6. The system of any one of Clauses 1 to 5, wherein the tracking subsystem is configured to determine the timestamped camera location approximately simultaneously with the generation of each respective image file.
Clause 7. The system of any one of Clauses 1 to 6, wherein the image overlay module is configured to generate the image-overlaid model approximately simultaneously with the generation of each image file.
Clause 8. The system of any one of Clauses 1 to 7, wherein the interpolated location of the captured surface region for each respective camera image is accurate to within ± 2 millimeters.
Clause 9. The system of any one of Clauses 1 to 8, wherein the tracking subsystem is configured to track location and orientation at a rate of approximately 120 FPS.
Clause 10. The system of any one of Clauses 1 to 9, wherein the tracking subsystem further comprises a plurality of tracking cameras, each tracking camera being calibrated such that a physical location of the tracking camera relative to the large-scale manufacturing product is assigned to a corresponding location in the local three-dimensional reference frame.
Clause 11. The system of any one of Clauses 1 to 10, wherein the tracking subsystem is further configured to generate the tracking record automatically in response to the capture of images using the trackable camera device.
Clause 12. The system of any one of Clauses 1 to 11, further comprising a display interface configured to provide a graphical representation of the image-overlaid model.
Clause 13. The system of Clause 12, wherein the display interface is interactive.
Clause 14. A method of using a system for locating and visualizing camera images in relation to a large-scale manufacturing product, the system including at least one image processing controller and at least one memory configured to store data comprising captured image files, a three-dimensional computer model of the large-scale manufacturing product in a local three-dimensional reference frame, and computer-executable functions configured to be executed by the at least one image processing controller and, when executed by the at least one image processing controller, configuring the at least one image processing controller to process and render the three-dimensional computer model and captured image files, the method comprising:
   using a trackable camera device comprising a camera and a tracking marker to capture an image of a portion of the surface of the large-scale manufacturing product and generate a corresponding image file; and
   using the at least one image processing controller of the imaging system to:
      determine a location and orientation of the camera relative to the large-scale manufacturing product when the image is captured via the tracking marker; and
      based on the determined location and orientation of the camera, overlay the captured image on the three-dimensional computer model of the large-scale manufacturing product in the local three-dimensional reference frame in a position, orientation, and size corresponding to the portion of the surface of the large-scale manufacturing product captured in the image.
Clause 15. The method of Clause 14, further comprising:
   using a tracking subsystem to track the location and orientation of the trackable camera device in the local three-dimensional reference frame based on the tracking marker and to generate a tracking record indicating the location and orientation of the trackable camera device in the local three-dimensional reference frame over time; and
   overlaying the captured image on the three-dimensional computer model of the large-scale manufacturing product by:
      determining, based on the tracking record and timestamp data in the image file, a timestamped camera location where the camera image was captured by the camera in relation to the local three-dimensional reference frame;
      interpolating, based on the timestamped camera location and three-dimensional model, a captured surface region of the large-scale manufacturing product depicted in the respective camera image, the captured surface region being mapped in the local three-dimensional reference frame; and
      overlaying the camera image onto the three-dimensional computer model at the respective captured surface region.
Clause 16. The method of Clause 15, wherein interpolating the captured surface region of the large-scale manufacturing product comprises:
   determining a respective orientation of the camera at the timestamped camera location; and
   mapping an area of a nearest surface of the three-dimensional model relative to the timestamped camera location based on the respective orientation of the camera.
Clause 17. The method of Clause 16, wherein interpolating the captured surface region of the large-scale manufacturing product further comprises calculating a distance between the timestamped camera location and the nearest surface of the three-dimensional model according to the respective orientation of the camera.
Clause 18. The method of any one of Clauses 15 to 17, wherein the interpolated location of the captured surface region for each respective camera image is accurate to within ± 2 millimeters.
Clause 19. The method of any one of Clauses 15 to 18, wherein the tracking subsystem is further configured to generate the tracking record automatically in response to the capture of images using the trackable camera device.
Clause 20. The method of any one of Clauses 15 to 19, wherein the tracking subsystem is configured to track location and orientation at a rate of approximately 120 FPS.
Clause 21. The method of any one of Clauses 15 to 20, wherein the tracking record is generated approximately simultaneously with the generation of the image file.
Clause 22. The method of any one of Clauses 14 to 21, wherein the camera image is overlaid onto the three-dimensional computer model approximately simultaneously with the generation of the image file.
Clause 23. The method of any one of Clauses 14 to 22, further comprising displaying a graphical representation of the image-overlaid model on a display interface.
Clause 24. The method of any one of Clauses 14 to 23, wherein the display interface is interactive.
Clause 25. The method of any one of Clauses 14 to 24, further comprising:
   using the trackable camera device to capture a plurality of images of respective portions of the surface of the large-scale manufacturing product and generate a corresponding plurality of image files; and
   overlaying each respective image on the three-dimensional computer model of the large-scale manufacturing product in the local three-dimensional reference frame in a position, orientation, and size corresponding to the portion of the surface of the large-scale manufacturing product captured in the respective image.
Clause 26. A method for retroactively auditing a condition of a large-scale manufacturing product, the method comprising:
   capturing one or more camera images of the large-scale manufacturing product, each at a respective first point in time, each camera image depicting a respective captured surface region of the large-scale manufacturing product;
   generating an image-overlaid model comprising a three-dimensional computer model of the large-scale manufacturing product and each of the one or more camera images overlaid onto the three-dimensional computer model in a respective position, size, and orientation corresponding to the respective captured surface region;
   at a second point in time after each respective first point in time, determining a region of interest of the large scale manufacturing product; and
   displaying a view of the image-overlaid model that includes the captured camera images depicting a captured surface region including said the determined region of interest of the large-scale manufacturing product.
Clause 27. The method of Clause 26, wherein the large-scale manufacturing product is an airframe.
Clause 28. The method of Clause 26, wherein the large-scale manufacturing product is a fuselage.
Clause 29. The method of Clause 26, wherein the large-scale manufacturing product is a fuselage interior.
Clause 30. A method of identifying foreign object debris (FOD) on a type of large-scale manufacturing product, the method comprising:
   training a machine learning model for FOD-identification based on a plurality of image-overlaid models of previous units of said type of large-scale manufacturing products, wherein each image-overlaid model comprises camera images of the respective unit overlaid on a three-dimensional model of the type of large-scale manufacturing product;
   capturing new camera images of a new unit of the large-scale manufacturing product, each new camera image depicting a respective captured surface region of the new unit;
   generating a new image-overlaid model comprising the three-dimensional computer model and each of the new camera images overlaid onto the three-dimensional computer model in a respective position, size, and orientation corresponding to the respective captured surface region; and
   using the machine learning model for FOD-identification to identify FOD based on the new camera images.

Other aspects will be in part apparent and in part pointed out hereinafter.

### BRIEF DESCRIPTION OF THE DRAWINGS

FIG. 1 is a schematic illustration of a system for locating and visualizing camera images in relation to a large-scale manufacturing product being used during inspection of an aircraft fuselage interior;
FIG. 2 is a schematic illustration of a tracking subsystem of the system of FIG. 1;
FIG. 3 is a perspective of a trackable camera device of the system of FIG. 1 being used in the interior of the aircraft fuselage;
FIG. 4 is a flow diagram of method steps for locating and visualizing camera images via the system of FIG. 1;
FIG. 5 is an illustration of a virtual environment rendered by a visualization subsystem of the system of FIG. 1;
FIG. 6 is a schematic view of a client computing device of the system of FIG 1 displaying an image-overlaid computer model generated by the visualization subsystem; and
FIG. 7 is an elevational view of certain components of the system of FIG. 1 being used during an inspection of the exterior of the aircraft fuselage.

Corresponding reference characters indicate corresponding parts throughout the drawings.

### DETAILED DESCRIPTION

This disclosure generally pertains to a system for locating and visualizing camera images in relation to a large-scale manufacturing product with repetitive structural features. The disclosed system can be used for creating an auditable record of the visual condition of such a manufacturing product at a particular point in time. More specifically, the system provides a computer-implemented method for automatically tracking and indicating which portion of large-scale manufacturing product is captured in a given camera image. In one implementation, the locating and visualization subsystem of the present disclosure can be used for FOD inspection on manufactured airframe products (which, broadly, are one type of large-scale manufacturing product with repetitive structural features). As will be explained in further detail below, the system of the present disclosure uses a tracking subsystem to track an airframe component and a camera in relation to a three-dimensional reference frame. Whenever the camera captures an image, the system creates a timestamped record of the position and orientation of the camera in the three-dimensional reference frame. Based on known characteristics of the camera and the known positions of the airframe component and camera when the camera image was captured, the system then determines which portion of the airframe component was captured in the image. To create an auditable record that clearly indicates where the camera image was taken, the system overlays the camera image onto a corresponding portion of a three-dimensional computer model of the airframe component. This image-overlaid computer model can be referenced at a future point in time to assess the visual condition of the condition of the relevant portion of the airframe component when the camera image was captured.

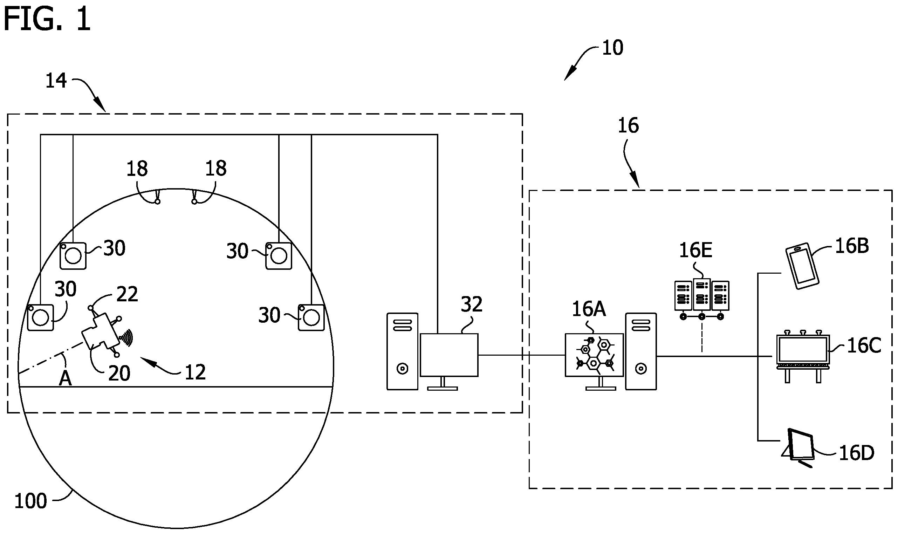

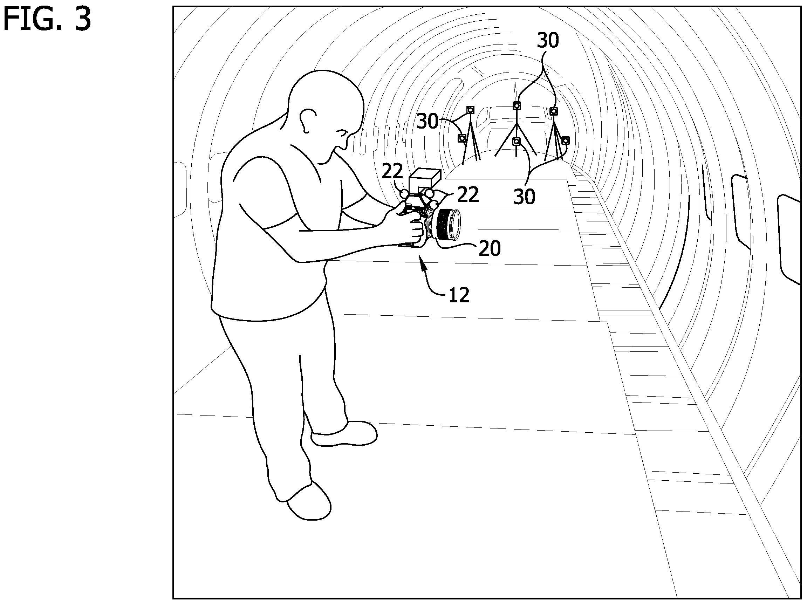

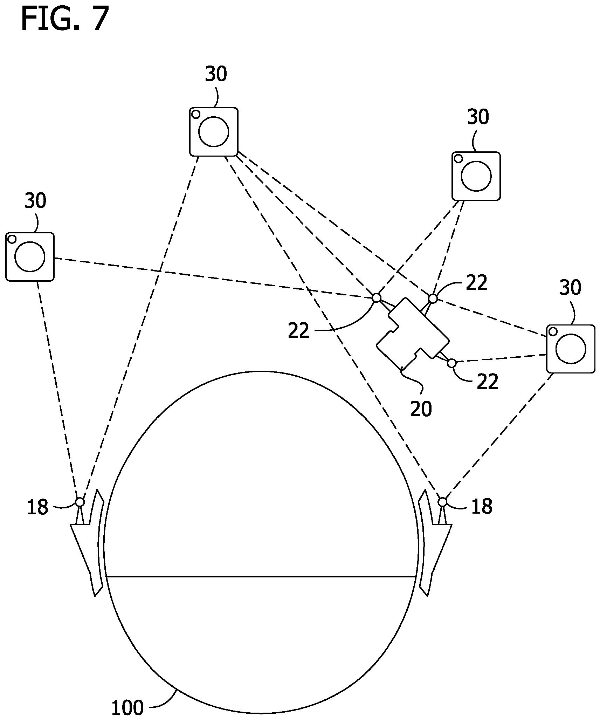

Referring now to FIG. 1, a system for locating and visualizing camera images in relation to a large-scale manufacturing product is shown schematically and generally indicated at reference number 10. In FIG. 1, the system 10 is shown in use creating a visual inspection record of the interior of an airplane fuselage 100. However, the system 10 may be used for locating and visualizing surface features of other portions of an airframe (e.g., the exterior of the fuselage 100, as is shown generally in FIG. 7) or any other large-scale manufacturing product. The system 10 may have particular utility for creating a visual inspection record of a large-scale manufacturing product that both (i) is difficult to capture in a single camera image and (ii) has highly repetitive structural features. As is best seen in FIG. 3, the interior of the fuselage 100 includes a number of highly repetitive structural features, such as stringers, windows, and skin panels. Due to these repetitious, self-similar structures, when the interior of the fuselage 100 is photographed, e.g., during FOD inspection, the resulting camera images lack clear markers to indicate which portions of the fuselage are depicted. Even advanced image processing algorithms are incapable of reliably determining the location on the fuselage depicted in a camera image based on the raw image content.

As is shown in FIG. 1, the system 10 broadly comprises a trackable camera device 12, a tracking subsystem 14, and a visualization subsystem 16 including one or more computing devices 16A-E. In general, the trackable camera device 12 is configured for capturing images of the fuselage 100; the tracking subsystem 14 is configured for tracking the location and orientation of the trackable camera device in relation to the fuselage in a three-dimensional reference frame; and the visualization subsystem 16 executes an image overlay module configured for generating an image-overlaid model comprising a three-dimensional computer model of the fuselage with camera images mapped to the three-dimensional computer model. As will be explained in further detail below, the image overlay module uses tracking data from the tracking subsystem 14 and known characteristics of the trackable camera device 12 to interpolate which portions of the fuselage are captured in each image and generate the image-overlaid model accordingly.

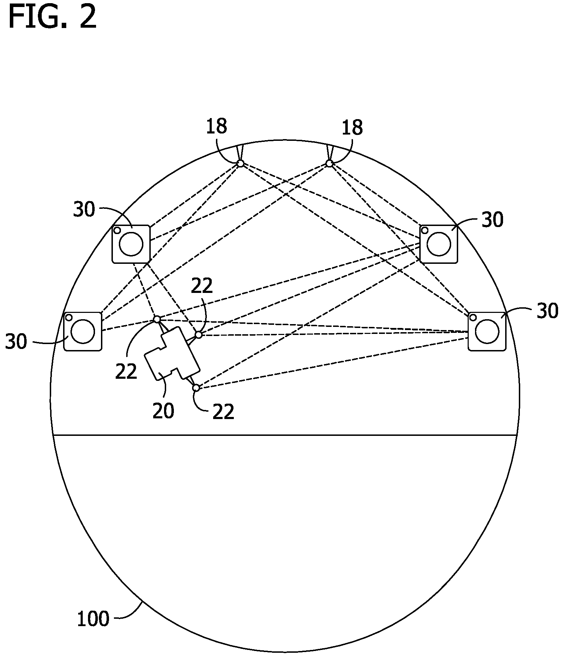

As is shown in FIGS. 1 and 2, the trackable camera device 12 includes an inspection camera 20 and a plurality of tracking targets 22. In general, the inspection camera 20 may be any digital camera or device containing a digital image sensor. Suitably, the inspection camera 20 is configured for capturing camera images using the camera sensor and generating image files containing the camera images and metadata. The metadata in each image file can include one or more camera settings (e.g., camera model and make, orientation, aperture, shutter speed, focal length, metering mode and/or ISO speed), one or more image metrics (e.g., pixel dimensions, resolution, color space, and/or file size), and/or a timestamp data (e.g., date and time of image capture). In an exemplary embodiment, the metadata includes standard EXIF data. The inspection camera 20 is configured for transmitting the image files to the visualization subsystem 16 via a wireless (or wired) communication network.

The tracking targets 22 on the trackable camera device 12 comprise motion capture markers. For example, the tracking targets 22 can comprise one or more passive retroreflective markers, one or more active LED markers, or combinations thereof. A plurality of tracking targets 22 are mounted at fixed positions in relation to the inspection camera 20. Each tracking target 22 indicates a point location in the three-dimensional reference frame of the tracking subsystem 14. A sufficient number of tracking targets 22 are mounted on the trackable camera device 12 to enable the tracking subsystem 14 to determine the location and orientation of the trackable camera device in the three-dimensional reference frame. Furthermore, the tracking targets 22 have predetermined locations in relation to the image sensor of the camera. Hence, a focal axis A of the inspection camera 20 can be determined by triangulating the locations of the tracking targets 22 in the three-dimensional reference frame.

The illustrated tracking subsystem 14 includes a plurality of tracking cameras 30 (e.g., motion capture cameras), a plurality of orientation targets (or orientation markers) 18 at predefined locations relative to the fuselage 100, and a tracking computer 32. The tracking subsystem 14 is broadly configured for tracking the location and orientation of the trackable camera device 12 over time so that, for each camera image taken during a visual inspection process, the location and orientation of the trackable camera device 12 is known. The tracking subsystem 14 may employ any suitable motion tracking system, such as OptiTrack, ART, or Vicon, or any other suitable three-dimensional positional tracking system. The tracking subsystem 14 may be based on similar principles to the tracking system described in U.S. Patent No. 11,631,184, which is assigned to the same assignee as the present disclosure. U.S. Patent No. 11,631,184 is hereby incorporated by reference in its entirety for all purposes. In general, the tracking computer 32 is configured to define a three-dimensional reference frame based on the physical locations of the orientation targets 18 and determine the location of the fuselage 100 and trackable camera device 12 in relation the defined reference frame. The tracking cameras 30 are configured to acquire images and communicate those images to the tracking computer 32 (via wired or wireless connections) for processing. The tracking computer 32 determines the position and orientation of the trackable camera device 12 in relation to the tracking system's defined three-dimensional reference frame based on the images captured by the cameras 30.

The orientation targets 18 of the tracking subsystem 14 are used to define the three-dimensional reference frame and verify the location of the fuselage 100 in the tracking system's reference frame. The orientation targets 18 may comprise one or more passive retroreflective markers, one or more active LED markers, or combinations thereof. Each orientation target 18 indicates a point location in the three-dimensional reference frame of the tracking subsystem 14. In one or more embodiments, one of the orientation targets 18 is fixedly mounted at an origin point (0, 0, 0) for the tracking system's three-dimensional (x, y, z) reference frame, and other orientation targets 18 are fixedly mounted at other known locations in the three-dimensional reference frame. During the visual inspection process, the fuselage 100 is fixed in relation to the tracking system's three-dimensional reference frame. In the illustrated embodiment, some of the orientation targets 18 are fixedly mounted on the fuselage 100 at known locations for verifying the position and orientation of the fuselage in the three-dimensional reference frame throughout the visual inspection process. The origin point (0,0,0) for the three-dimensional reference frame of the tracking subsystem 14 may differ from the origin point (0,0,0) for the manufacturer's aircraft reference frame (typically, the origin point for a manufacturer's aircraft reference frame is associated with the location of the tip of the nose in the fully assembled aircraft). However, the tracking computer 32 and/or visualization subsystem 16 can transform any point location in the tracking system's three-dimensional reference frame to a corresponding point location in the aircraft reference frame as needed. For example, it may be useful to transform the known location of the trackable camera device 12 defined in relation to the three-dimensional reference frame for the tracking system 14 to a location that is defined in relation to the aircraft reference frame in order to map the camera image to a three-dimensional computer model of the aircraft fuselage.

A plurality of tracking cameras 30 are mounted in an array, e.g., at predefined spaced apart locations near the fuselage 100. That is, the tracking cameras 30 are spaced apart and the tracking computer 32 stores a record of the known positions of the tracking cameras in relation to the three-dimensional reference frame. Suitably, the tracking cameras 30 are positioned so that at least one of the tracking cameras has a line of sight to each of the orientation targets 18. More preferably, the array of tracking cameras 30 is configured so that there are multiple lines of sight to the orientation targets 18. Additionally, the tracking cameras 30 should be positioned to have a line of sight to every anticipated location for the trackable camera device 12 inside the fuselage 100. More preferably, the array of tracking cameras 30 is configured so that there will be multiple lines of sight to the trackable camera device, wherever it is likely to be used inside the fuselage 100. Each of the tracking cameras 30 may be mounted on scaffolding, a gantry, a bracket, or other similar structure.

In one or more embodiments, each of the tracking cameras 30 is configured to acquire video and stream the video to the tracking computer 32 in real time. In certain embodiments, the tracking cameras 30 are configured to capture video at a frame rate of about 120 frames per second (FPS). The video captured by the cameras 30 is indexed in relation to time so that the time for every still frame making up the video is known. This allows for cross-referencing the timestamp data stored in the image files generated by the trackable camera device 12 so that the precise location of the trackable camera device at the moment each camera image was captured can be determined.

The tracking computer 32 includes a processor, a memory, user inputs, a display, and other related elements. The tracking computer 32 may also include circuit boards and/or other electronic components such as a transceiver or external connection for communicating with other computing devices of the system 10. The tracking computer 32 is configured to define the three-dimensional reference frame for the tracking system 14 based on the orientation targets 18 in the images captured by the tracking cameras 30. Further, the tracking computer 32 is configured to determine the location of the fuselage 100 in the three-dimensional reference frame based on the images from the tracking cameras. In addition, the tracking computer 32 is configured to track the motion of the trackable camera device 12 in relation to the three-dimensional reference frame based on the location of the tracking targets (or tracking markers) 22 in the video streamed from the cameras. In one or more embodiments, the tracking computer 32 is in communication with the inspection camera 20 and receives indication when each inspection image is captured. In these embodiments, the tracking computer 32 stores a record of the position and orientation of the trackable camera device 12 for each camera image. In an alternative embodiment, the tracking computer 32 stores a record of the motion of the trackable camera device 12 over time, and either the tracking computer or a computing device 16A-E of the visualization subsystem 16 (e.g., master computing device 16A) cross-references the time-stamped data for each inspection camera image with the record of motion over time to determine the position and orientation of the trackable camera at the moment when each inspection image was captured.

As shown in FIG. 1, the illustrated visualization subsystem 16 comprises a plurality of computing devices 16A-E, including a master computing device 16A, a plurality of client computing devices 16B, 16C, 16D and at least one remote/networked computing device 16E. Other embodiments may employ different numbers of visualization subsystem computers without departing from the scope of the disclosure. The computing devices 16A-E may be connected to each other via a wired or wireless communication network. In general, the master computing device 16A includes a processor, a memory, a plurality of inputs, and a display. The master computing device 16A may also include circuit boards and/or other electronic components such as a transceiver or external connection for communicating with external computing systems. The memory of the master computing device 16A stores processor-executable instructions that, when executed by the processor, configure the processor to function as an image overlay module for overlaying camera images from the trackable camera device 12 onto a three-dimensional computer model of the fuselage 100. The specific processes of the image overlay module will be described in further detail below.

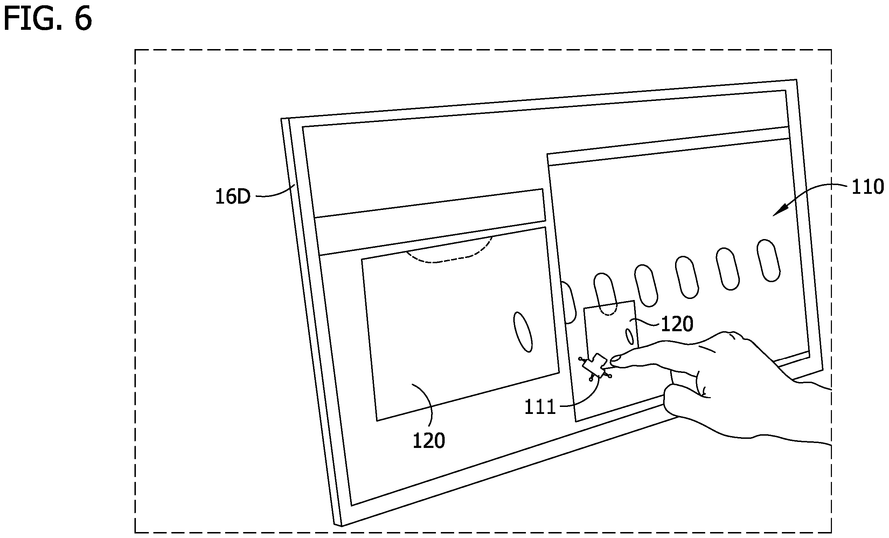

The client computing devices 16B, 16C, 16D are front-end computing devices linked to the master computing device 16A and may be desktop computers, laptop computers, tablets, handheld computing devices, kiosks, and the like. In the context the present disclosure, the client computing device 16B, 16C, 16D will typically be used for displaying and facilitating interaction with the image-overlaid model after said model is generated by the image overlay module. For example, as can be seen in FIG. 6 (and as discussed in greater detail below), either the master computing device 16A or any of the plurality of client computing devices 16B, 16C, 16D can display the image-overlaid model and facilitate user interaction with the image-overlaid model (e.g., selection of camera images, onscreen rotation or panning of the image-overlaid model, rescaling or zooming of the image-overlaid model or camera images, etc.).

The remote computing device 16E is a back-end computing device linked to the master computing device 16A and in various embodiments may be a desktop computer, a server, mainframe, data repositories, and the like. The remote computing device 16E comprises memory for long-term storage of the data collected and generated by the tracking subsystem 14 and the camera image files generated by the trackable camera device 12. In addition, the remote computing device 16E may provide long term memory for storing the three-dimensional computer model of the fuselage 100. This allows the master computing device 16A to remotely access the three-dimensional computer model, the tracking data, and the camera image files when executing the image overlay module. In other embodiments, the master computing device 16A may comprise local memory storing one or more of the data collected and generated by the tracking subsystem 14, the camera image files generated by the trackable camera device 12, and or the three-dimensional computer model for the fuselage.

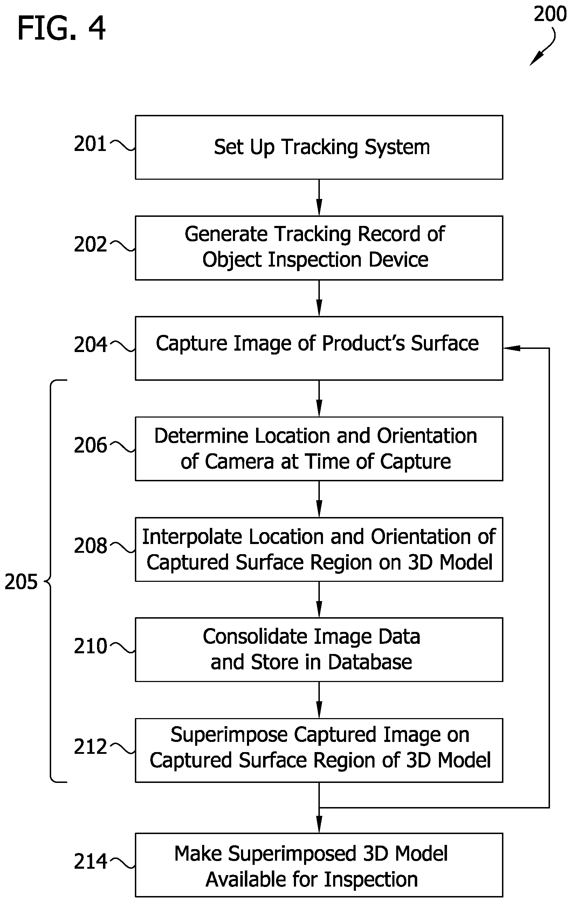

Turning to FIG. 4, an exemplary process for using the system 10 for locating and visualizing camera images in relation to a large-scale manufacturing product is generally indicated at reference number 200. As shown in block 201, at the start of the process 200, the tracking system 14 is set up. For example, the orientation targets 18 and the tracking cameras 30 are mounted at defined positions near the fuselage 100 and the tracking computer 32 is calibrated to the physical locations at which the orientation markers, tracking cameras, and fuselage are positioned. Some of the orientation targets 18 and/or tracking cameras 30 can be mounted as fixtures in a manufacturing facility. In this case, the set up step 201 comprises positioning the manufactured fuselage 100 in relation to the orientation targets 18 and tracking cameras 30 installed as fixtures, mounting one or more additional orientation targets 18 on the fuselage, and calibrating the tracking computer 32 to the location of the fuselage based on the additional orientations affixed thereto. Orientation targets 18 and tracking cameras 30 that are installed as fixtures are particularly well suited for use on the system 10 for locating and visualizing camera images in relation to the exterior of a fuselage (see FIG. 7). However, when using the system 10 to locate and visualize camera images in relation to the interior of a fuselage 100, it may be necessary to install tracking cameras 30 and orientation targets 18 inside each fuselage in the first step 201 of the process.

In this case, set up 201 can comprise installing one orientation target 18 inside the fuselage 100 at an origin point (0,0,0) for the tracking system's three-dimensional reference frame and installing a plurality of additional orientation targets 18 at known locations in the three-dimensional reference frame spaced apart from the origin point. At least some of the orientation targets 18 should be fixedly mounted on the fuselage 100 to provide an indication of the (stationary) position and orientation of the fuselage in relation to the three-dimensional reference frame. The tracking cameras 30 are also installed inside the fuselage 100 at known locations relative to the three-dimensional reference frame. In one or more embodiments, a plurality of the tracking cameras 30 and/or orientation targets 18 are mounted on a jig such as scaffolding (not shown) or a gantry structure (not shown), that can be moved as a unit into the fuselage 100. The tracking cameras 30 are suitably rigidly constrained for reliable data acquisition. To that end, the tracking cameras 30 may be clamped, mounted, or magnetically held to fuselage 100 or other mounting structure. Once installed, the locations of the orientation targets 18 and tracking cameras 30 are determined by the tracking computer 32 (e.g., based on user input and/or triangulation of images from the tracking cameras) to calibrate the location of the fuselage and tracking cameras in relation to the three-dimensional reference frame for the tracking system 14.

As shown in block 202, after setup is complete, the tracking subsystem 14 is then used to generate a tracking record of the trackable camera device 12. More specifically, as can be seen in FIG. 2, the tracking subsystem 14 determines a position and orientation of the trackable camera device 12 relative to the fuselage 100 at a specified capture rate. The tracking subsystem 14 detects the tracking targets 22 on the trackable camera device 12 via the cameras 30. In this way, the system 10 determines the position of the inspection camera 20 in the tracking system's three-dimensional reference frame and thus the position of the inspection camera relative to the known position of the fuselage 100. During the tracking process, the trackable camera device 12 and at least one of its respective tracking targets 22 (preferably, a plurality of the tracking targets) are in the line of sight of at least one, and ideally more than one, of the tracking cameras 30.

While the tracking subsystem 14 is generating the tracking record, the inspection camera 20 may be used to capture camera images of the target surface of the fuselage 100, as shown in block 204. One example of the inspection camera 20 capturing a camera image 120 of a target surface of the interior of the fuselage 100 is shown schematically in FIG. 6. The inspection camera 20 generates an image file containing the camera image 120 and the associated metadata, as described above. The illustrated inspection camera 20 wirelessly transmits the complete image file to the visualization subsystem 16 for processing by the image overlay module.

In FIG. 4, a computer implemented image overlay sub-process 205 is implemented by the image overlay module executed by a processor of one of the computing devices 16A-E, typically the master computing device 16A. The image overlay sub-process 205 generally uses the tracking data and image file to map the camera image to a three-dimensional model of the fuselage stored in memory (e.g., a database of the remote computing device 16E). For each camera image captured by the trackable camera device 12, the image overlay sub-process comprises a first step 206 of determining the location and orientation of the inspection camera 20 in relation to the fuselage 100 at the time the camera image was captured. In one or more embodiments, the visualization subsystem 16 cross-references the tracking record with timestamp stored in the metadata of the image file to determine the location and orientation of the inspection camera 20 at the moment the camera image was captured. In certain embodiments, the visualization subsystem 16 and/or the tracking computer 32 is connected to the inspection camera 20 to receive essentially instantaneous notice each time a camera image is taken. This provides another timestamp for the camera image that can be used as an alternative to the default image timestamp stored in the image file's EXIF data. In an exemplary embodiment, the location and orientation of the inspection camera 20 at the moment of image capture is determined and recorded in memory approximately simultaneously with image capture (e.g., less than 2 seconds after the image is acquired). The calculated position and orientation of the camera 20 may be recorded as additional metadata in the corresponding image file.

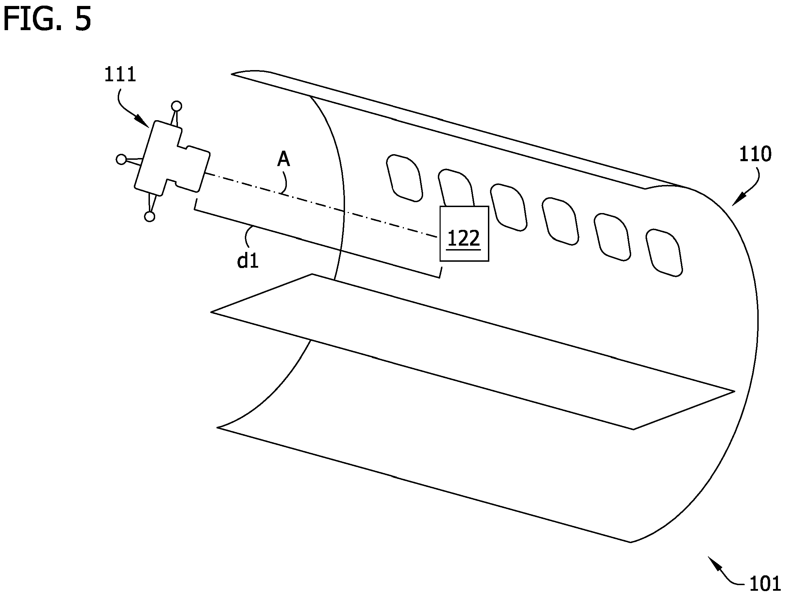

Referring to FIG. 5, the image overlay module can be configured to generate a virtual environment 101 representative of the physical inspection environment. For example, the image overlay module can define a virtual environment in relation to an aircraft manufacturer's aircraft reference frame. The image overlay module thus renders a three-dimensional computer model 110 for the fuselage 100 in the virtual environment 101 at the proper virtual location in relation to the aircraft reference frame. Based on the location and orientation of the inspection camera 20 determined in step 206, the visualization subsystem 16 further renders a virtual object 111 (e.g., computer model) for the inspection camera 20 in the virtual environment 101 at the proper virtual location and orientation relative to the aircraft reference frame. In one or more embodiments, the virtual object 111 indicates the focal axis A of the inspection camera 20 at the moment of image capture. Accordingly, the visualization subsystem 16 can be configured to render a virtual environment 101 that is defined in relation to an aircraft reference frame and which is rendered to include a three-dimensional computer model 110 of the fuselage 100 and a camera object 111 indicating the location and orientation of the inspection camera 20 and its focal axis A at the moment of image capture.

Referring to FIGS. 4 and 5, as shown in block 208, for each camera image captured by the trackable camera device 12, the visualization subsystem 16 interpolates a captured surface region 122 on the three-dimensional computer model 110 that corresponds to the surface depicted in image 120. As can be seen in FIG. 5, in an exemplary embodiment, the interpolation process comprises determining the focal axis A of the inspection camera 20 at the moment of image capture, determining the point of intersection between the focal axis A and the nearest surface of the three-dimensional computer model, calculating a distance d1 between the nearest surface and the camera sensor, and interpolating the captured surface region 122 based on the determined distance d1 and optical properties of the inspection camera 20 stored in the metadata for the image file. In this way, the system 10 may determine the orientation and scale of the image 120 in the aircraft coordinate reference frame.

Subsequently, the image overlay module can consolidate and store the images, calculated location data, and three-dimensional model 110 in memory, as shown in block 210. For example, the data can be stored remotely in a database of the remote computing device 16E, or locally in the master computing device 16A or one of the client computing devices 16B, 16C, 16D. In one embodiment, the images and associated location data may be stored in a feature map structure that organizes and consolidates the data to optimize generation of the image-overlaid model.

In the last step 212 of the image overlay process 205, the image overlay module overlays (or superimposes) the scaled image 120 onto the three-dimensional model 110. In the overlay step 212, the image overlay module renders the virtual environment to place the scaled camera image at the captured surface region 122 of the three-dimensional computer model 110 previously interpolated in step 208. In an exemplary embodiment, accuracy of the tracking system 14 and algorithm used for the image overlay sub-process 205 is such that the placement of the image 120 on the three-dimensional computer model is accurate to within approximately ± 2 millimeters in the aircraft coordinate system.

It can be seen that the image overlay process 205 is repeated for every camera image captured during an inspection process. Thus, the system 10 is configured to facilitate an inspection processes, such as a FOD inspection process, in which an inspector takes numerous (e.g., 10 or more, 20 or more, 50 or more, etc.) camera images of the fuselage. For each camera image taken during such an inspection process, the visualization subsystem 16 automatically (and in essentially real-time) updates the image-overlaid computer model to include the camera image overlaid on the three-dimensional computer model at the correct location. In this way, the system 10 is configured to automatically create a record that maps inspection images to the regions of the fuselage 100 depicted in each.

After the image-overlaid model has been rendered, it can be displayed on any of the computing devices 16A-D, as shown in block 214 and further depicted in FIG. 6. The use of the three-dimensional computer model 110 enables a user to easily visualize the surfaces captured in the images 120 and their positions relative to the fuselage 100 on both a large scale and a small scale. In an exemplary embodiment, the display system for the image-overlaid computer model is interactive. For example, the image-overlaid computer model is presented onscreen, and the user uses a human-machine interface (HMI) to manipulate the image-overlaid computer model onscreen. In one embodiment, the user can pan around the image-overlaid computer model, rotate the image-overlaid computer model, and select particular camera images on the image-overlaid computer model for closer inspection.

The system 10 may use the image data for cross-referencing (or auditing) in future inspections, for example where the surface of the fuselage 100 is examined both before and after a stage of manufacturing or transportation. Further, the system 10 can be used to keep track not only of where any surface features of interest are located on the fuselage but also when they were first created or identified.

The system 10 and process 200 can be used in various ways to improve inspection processes. Fundamentally, it can be seen that the system 10 and process 200 provide an auditable record of visual inspection processes, e.g., FOD inspections. Accordingly, in one aspect, this disclosure provides a method for retroactively auditing a condition of a large-scale manufacturing product such as the fuselage 100. One example of such a retroactive audit process will now be described in relation to a visual FOD inspection for a fuselage interior, but it will be understood that principles of the process can be adapted for creating an auditable record of other types of visual inspections. The process comprises conducting a visual inspection of the fuselage interior at a FOD inspection time. The FOD inspection time may be a point in time after manufacturing of the fuselage is complete but prior to delivery, at the point in time when the manufactured fuselage is provided to a shipper, or at the point in time when the manufactured fuselage is delivered to the aircraft manufacturer for aircraft assembly. At the FOD inspection time, the FOD inspector captures camera images of the fuselage interior using the trackable camera device 12 while it is tracked by the calibrated tracking system 14. The visualization subsystem 16 then compiles the FOD inspection camera images into an image-overlaid computer model in accordance with the process 200 shown in FIG. 4. Subsequently, at a second point in time after the FOD inspection time, it may become necessary to determine the visual condition of a region of interest of the fuselage at the time of the FOD inspection. If this occurs, the interested party can display the image-overlaid model on a display computer 16A-16D. More particularly, the interested party can provide user input to display a view of the image-overlaid model that includes the captured camera images depicting a captured surface region including the region of interest. In this way, the camera images provide clear record of the visual condition of the region of interest at the time of FOD inspection is provided and image-overlaid computer model provides a clear record that the camera images are properly mapped to the region of interest.

The system 10 and process 200 can also be used more generally for manufacturing process improvement. For example, image-overlaid computer models with camera images of comprehensive FOD inspections can be generated for a plurality (e.g., 10 or more, 20 or more, 50 or more, etc.) of manufactured fuselages of a given type. The plurality of image-overlaid computer models can be used to train a machine learning model for artificial intelligence-based FOD-detection. The machine learning model can be run by a machine learning module executed by a processor of one of the computing devices 16A-E, typically the master computing device 16A. The machine learning model may be configured to identify problem regions where FOD tends to collect after manufacturing is complete. When problem areas are identified, steps for future manufactured fuselages of the relevant fuselage type, the manufacturer can take targeted mitigation steps to mitigate against FOD in the problem area. Alternatively, the machine learning model may be configured to detect FOD that may be overlooked by human inspectors during manual capture.

The machine learning model may be trained based on previously generated image-overlaid models of one or more fuselage units (or, more broadly, one or more units of any large-scale manufacturing product) as generally described in connection with FIG. 4. During the training process, FOD may be identified manually by an operator to train the machine learning model, for instance by selecting a region of each captured image that includes the identified FOD. Subsequently, the system 10 may be used in conjunction with the machine learning model to capture images of a new unit (or a previously captured unit at a later time), generate a corresponding image-overlaid model that overlays each camera image to the model in a corresponding position, size, and orientation, and identify the FOD in each of the captured images. In one embodiment, the machine learning module can be further configured to process frames from a live video captured by the camera 20 to automate some or all of the image capture process. In particular, whenever FOD is detected by the machine learning module in one or more frames of the video, the system 10 may select a representative frame showing the FOD and designate the selected frame as a camera image 120 for purposes of generating an image-overlaid model in accordance with the above-described process 200.

Referring to FIG. 7, as explained briefly above, the system 10 is not limited to use in the interior of a fuselage. The system 10 has, in fact, also been tested and validated for use in recording images of the exterior of an airframe structure. Again, it is contemplated that the system 10 can be used for any large-scale manufactured structure with repetitious structural elements.

In view of the foregoing, it can be seen that an advantage of the system 10 is that it allows inspectors to quickly, reliably, and accurately identify and record the location of FOD and other significant surface features on large-scale manufacturing equipment with highly repetitive structures. Additionally, inspectors or workers are able to quickly identify and revisit a previously captured feature both virtually and in person. Further, the image capturing capabilities can be accomplished using a standard camera, and the image processing capabilities can be accomplished using a standard computer terminal. Accordingly, the system 10 does not require a substantial investment in specialized, resource-intensive photogrammetry equipment. Further, the image data captured and calculated by the system 10 can be periodically logged throughout the lifetime of the manufacturing product for more robust recordkeeping and auditing.

As described above, various aspects of this disclosure pertain to computer devices and corresponding computer-implemented processes. Where this disclosure describes a computer device, it is to be understood that the computer device may comprise a special purpose computer including a variety of computer hardware, as described in greater detail herein. For purposes of illustration, programs and other executable program components may be shown or described as discrete blocks or modules. It is recognized, however, that such programs and components reside at various times in different storage components of a computing device, and are executed by a data processor(s) of the device.

Although described in connection with an example computing system environment, embodiments of the aspects of the invention are operational with other special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the invention.

Embodiments may be implemented with processor-executable instructions. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the invention.

When introducing elements of the invention or embodiments thereof, the articles "a," "an," "the," and "said" are intended to mean that there are one or more of the elements. The terms "comprising," "including," and "having" are intended to be inclusive and mean that there may be additional elements other than the listed elements.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

The above description illustrates embodiments by way of example and not by way of limitation. This description enables one skilled in the art to make and use aspects of the invention, and describes several embodiments, adaptations, variations, alternatives and uses of the aspects of the invention, including what is presently believed to be the best mode of carrying out the aspects of the invention. Additionally, it is to be understood that the aspects of the invention are not limited in its application to the details of construction and the arrangement of components set forth in the following description or illustrated in the drawings. The aspects of the invention are capable of other embodiments and of being practiced or carried out in various ways. Also, it will be understood that the phraseology and terminology used herein is for the purpose of description and should not be regarded as limiting.

It will be apparent that modifications and variations are possible without departing from the scope of the invention defined in the appended claims. As various changes could be made in the above constructions and methods without departing from the scope of the invention, it is intended that all matter contained in the above description and shown in the accompanying drawings shall be interpreted as illustrative and not in a limiting sense.

In view of the above, it will be seen that several advantages of the aspects of the invention are achieved and other advantageous results attained.

The Abstract and Summary are provided to help the reader quickly ascertain the nature of the technical disclosure. They are submitted with the understanding that they will not be used to interpret or limit the scope or meaning of the claims. The Summary is provided to introduce a selection of concepts in simplified form that are further described in the Detailed Description. The Summary is not intended to identify key features or essential features of the claimed subject matter, nor is it intended to be used as an aid in determining the claimed subject matter.

## Claims

1. A system for locating and visualizing camera images in relation to a large-scale manufacturing product, the system comprising:
a memory storing a three-dimensional computer model of the large-scale manufacturing product in a local three-dimensional reference frame;
a trackable camera device comprising a camera and a tracking marker, the camera configured to capture camera images and generate image files including the camera images and timestamp data;
a tracking subsystem comprising a tracking controller configured for tracking a location and orientation of the trackable camera device in the local three-dimensional reference frame based on the tracking marker and a memory storing computer-executable functions configured to be executed by the tracking controller, and when executed by the tracking controller, configuring the tracking subsystem to generate a tracking record indicating the location and orientation of the trackable camera device in the local three-dimensional reference frame over time; and
an image overlay module comprising an image processing controller and a memory storing computer-executable functions configured to be executed by the image processing controller, and when executed by the image processing controller, configuring the image overlay module to:
determine, based on the timestamp data and the tracking record, a timestamped camera location where each of the camera images was captured by the camera in relation to the local three-dimensional reference frame;
interpolate, based on the timestamped camera locations and three-dimensional model, a captured surface region of the large-scale manufacturing product depicted in each respective camera image, the captured surface region being mapped in the local three-dimensional reference frame; and
generate an image-overlaid model comprising the three-dimensional computer model and one or more of the camera images overlaid onto the three-dimensional computer model at the respective captured surface region.

2. The system of claim 1, wherein each image file further comprises metadata including at least one of image size data, image definition data, and camera focus data, wherein the image overlay module is configured to use the metadata to interpolate the captured surface region.

3. The system of claim 2, wherein the image overlay module is configured to interpolate the captured surface region by:
determining a respective orientation of the camera at each timestamped camera location; and
mapping an area of a nearest surface of the three-dimensional model relative to each timestamped camera location based on the respective metadata and camera orientation;
optionally wherein the image overlay module is further configured to interpolate the captured surface region by calculating a distance between each timestamped camera location and the nearest surface of the three-dimensional model according to the respective orientation of the camera.

4. The system of any preceding claim, further comprising a database with a memory configured to store data comprising the image files; and/or
wherein the tracking subsystem is configured to determine the timestamped camera location approximately simultaneously with the generation of each respective image file; and/or wherein the image overlay module is configured to generate the image-overlaid model approximately simultaneously with the generation of each image file.

5. The system of any preceding claim, wherein the interpolated location of the captured surface region for each respective camera image is accurate to within ± 2 millimeters.

6. The system of any preceding claim, wherein the tracking subsystem is configured to track location and orientation at a rate of approximately 120 FPS; and/or
wherein the tracking subsystem further comprises a plurality of tracking cameras, each tracking camera being calibrated such that a physical location of the tracking camera relative to the large-scale manufacturing product is assigned to a corresponding location in the local three-dimensional reference frame; and/or
wherein the tracking subsystem is further configured to generate the tracking record automatically in response to the capture of images using the trackable camera device.

7. The system of any preceding claim, further comprising a display interface configured to provide a graphical representation of the image-overlaid model, wherein the display interface is optionally interactive.

8. A method of using a system for locating and visualizing camera images in relation to a large-scale manufacturing product, the system including at least one image processing controller and at least one memory configured to store data comprising captured image files, a three-dimensional computer model of the large-scale manufacturing product in a local three-dimensional reference frame, and computer-executable functions configured to be executed by the at least one image processing controller and, when executed by the at least one image processing controller, configuring the at least one image processing controller to process and render the three-dimensional computer model and captured image files, the method comprising:
using a trackable camera device comprising a camera and a tracking marker to capture an image of a portion of the surface of the large-scale manufacturing product and generate a corresponding image file; and
using the at least one image processing controller of the imaging system to:
determine a location and orientation of the camera relative to the large-scale manufacturing product when the image is captured via the tracking marker; and
based on the determined location and orientation of the camera, overlay the captured image on the three-dimensional computer model of the large-scale manufacturing product in the local three-dimensional reference frame in a position, orientation, and size corresponding to the portion of the surface of the large-scale manufacturing product captured in the image.

9. The method of claim 8, further comprising:
using a tracking subsystem to track the location and orientation of the trackable camera device in the local three-dimensional reference frame based on the tracking marker and to generate a tracking record indicating the location and orientation of the trackable camera device in the local three-dimensional reference frame over time; and
overlaying the captured image on the three-dimensional computer model of the large-scale manufacturing product by:
determining, based on the tracking record and timestamp data in the image file, a timestamped camera location where the camera image was captured by the camera in relation to the local three-dimensional reference frame;
interpolating, based on the timestamped camera location and three-dimensional model, a captured surface region of the large-scale manufacturing product depicted in the respective camera image, the captured surface region being mapped in the local three-dimensional reference frame; and
overlaying the camera image onto the three-dimensional computer model at the respective captured surface region;
optionally wherein interpolating the captured surface region of the large-scale manufacturing product comprises:
determining a respective orientation of the camera at the timestamped camera location; and
mapping an area of a nearest surface of the three-dimensional model relative to the timestamped camera location based on the respective orientation of the camera;
optionally wherein interpolating the captured surface region of the large-scale manufacturing product further comprises calculating a distance between the timestamped camera location and the nearest surface of the three-dimensional model according to the respective orientation of the camera;
and further optionally wherein the interpolated location of the captured surface region for each respective camera image is accurate to within ± 2 millimeters.

10. The method of claim 9, wherein the tracking subsystem is further configured to generate the tracking record automatically in response to the capture of images using the trackable camera device; and/or
wherein the tracking subsystem is configured to track location and orientation at a rate of approximately 120 FPS; and/or
wherein the tracking record is generated approximately simultaneously with the generation of the image file.

11. The method of any one of claims 8 to 10, wherein the camera image is overlaid onto the three-dimensional computer model approximately simultaneously with the generation of the image file; and/or
further comprising displaying a graphical representation of the image-overlaid model on a display interface; and/or.
wherein the display interface is interactive.

12. The method of claim 11, further comprising:
using the trackable camera device to capture a plurality of images of respective portions of the surface of the large-scale manufacturing product and generate a corresponding plurality of image files; and
overlaying each respective image on the three-dimensional computer model of the large-scale manufacturing product in the local three-dimensional reference frame in a position, orientation, and size corresponding to the portion of the surface of the large-scale manufacturing product captured in the respective image.

13. A method for retroactively auditing a condition of a large-scale manufacturing product, the method comprising:
capturing one or more camera images of the large-scale manufacturing product, each at a respective first point in time, each camera image depicting a respective captured surface region of the large-scale manufacturing product;
generating an image-overlaid model comprising a three-dimensional computer model of the large-scale manufacturing product and each of the one or more camera images overlaid onto the three-dimensional computer model in a respective position, size, and orientation corresponding to the respective captured surface region;
at a second point in time after each respective first point in time, determining a region of interest of the large scale manufacturing product; and
displaying a view of the image-overlaid model that includes the captured camera images depicting a captured surface region including said the determined region of interest of the large-scale manufacturing product.

14. The method of claim 13, wherein the large-scale manufacturing product is an airframe, a fuselage or a fuselage interior.

15. A method of identifying foreign object debris (FOD) on a type of large-scale manufacturing product, the method comprising:
training a machine learning model for FOD-identification based on a plurality of image-overlaid models of previous units of said type of large-scale manufacturing products, wherein each image-overlaid model comprises camera images of the respective unit overlaid on a three-dimensional model of the type of large-scale manufacturing product;
capturing new camera images of a new unit of the large-scale manufacturing product, each new camera image depicting a respective captured surface region of the new unit;
generating a new image-overlaid model comprising the three-dimensional computer model and each of the new camera images overlaid onto the three-dimensional computer model in a respective position, size, and orientation corresponding to the respective captured surface region; and
using the machine learning model for FOD-identification to identify FOD based on the new camera images.
